(19) **Europäisches Patentamt / European Patent Office / Office européen des brevets**

(11) **EP 1 941 663 B1**

(12) **EUROPEAN PATENT SPECIFICATION**

(45) Date of publication and mention
of the grant of the patent:
**16.11.2011 Bulletin 2011/46**

(51) Int Cl.:
*H04L 12/28* (2006.01)    *H04M 11/06* (2006.01)
*H04B 10/207* (2006.01)   *H04Q 11/04* (2006.01)

(21) Application number: **06778492.6**

(22) Date of filing: **04.08.2006**

(86) International application number:
**PCT/FI2006/000270**

(87) International publication number:
**WO 2007/028852 (15.03.2007 Gazette 2007/11)**

(54) **METHOD FOR ESTABLISHING A SUBSCRIBER CONNECTION AND A SYSTEM UTILIZING THE METHOD**

VERFAHREN ZUR HERSTELLUNG EINER TEILNEHMERVERBINDUNG UND DAS VERFAHREN BENUTZENDES SYSTEM

MÉTHODE POUR ÉTABLIR UNE CONNEXION D ABONNÉ ET SYSTÈME EXPLOITANT LA MÉTHODE

(84) Designated Contracting States:
**AT BE BG CH CY CZ DE DK EE ES FI FR GB GR HU IE IS IT LI LT LU LV MC NL PL PT RO SE SI SK TR**

(30) Priority: **05.08.2005  FI 20050796**

(43) Date of publication of application:
**09.07.2008  Bulletin 2008/28**

(73) Proprietor: **Laamanen, Heikki**
**02230 Espoo (FI)**

(72) Inventor: **Laamanen, Heikki**
**02230 Espoo (FI)**

(56) References cited:
**EP-A1- 1 389 029         WO-A1-03/017634**
**WO-A1-03/017634         WO-A1-2005/029907**
**WO-A2-02/45383           WO-A2-02/45383**
**US-A1- 2002 031 113**

EP 1 941 663 B1

## Description

### *Field of the Invention*

The invention relates to a method and a system for establishing a digital subscriber connection between a central site and a subscriber's transmission device.

Accordingly, the invention consists of a method of establishing a digital FTTC (Fiber To The Curb, Fiber To The Cabinet) subscriber connection comprising an optical fiber and a metallic twisted pair cable, and to converter equipment connecting the optical fiber and the metallic twisted pair cable, said converter equipment being an integral element of the subscriber connection.

### *Background of the Invention*

In a conventional subscriber network based on a twisted metallic pair cable, each subscriber is connected to a local telephone exchange or concentrator via said subscriber's pair cable. A typical length of a pair cable may be several kilometers at most. If the pair cable is utilized for transmitting digital information by means of DSL (Digital Subscriber Line) modem techniques, the transfer characteristics of the cable limit the highest achievable transmission rate from a few hundred kilobits per second to a few megabits per second, depending primarily on the cable length.

Subsequently the term "central site" represents the local telephone exchange or concentrator site.

Subsequently a DSL modem stands for, in a broader sense, a transmission device that converts a digital information stream into an analog signal that can be transmitted over a metallic pair cable by utilizing the available frequency band, and which detects a received signal and converts it reliably into the original digital information stream at the receiving end. A metallic pair cable is a very difficult transmission medium, incurring strong linear amplitude and signal phase distortion, among other impairments. In a DSL modem, these impairments are equalized by using tools offered by digital signal processing, providing the basis for adaptive amplitude and phase distortion correction. A DSL modem may utilize several different modulation methods, e.g. DMT modulation (Discrete MultiTone) or QAM (Quadrature Amplitude Modulation).

In utilizing a conventional subscriber network for transmission of digital information, the signal conversion in the interface of the metallic cable and the digital trunk network is typically carried out by DSLAM equipment (Digital Subscriber Line Access Multiplexer). A DSLAM comprises a number of DSL modems transforming the digital signal into a form suitable for transmission over the metallic pair cable and transmitting the transformed signal in the subscriber direction, and receiving the signal coming from the subscriber as well as converting the signal into digital form. Furthermore, the DSLAM multiplexes traffic from several subscribers and transmits the traffic to the trunk network.

In a digital FTTC subscriber network, data streams for several subscribers are multiplexed onto an optical fiber and transported nearer to the subscribers over the fiber so that the lengths of the metallic pair cables are substantially shorter compared to a conventional subscriber network. As a consequence, the transmission rate of digital information can be increased considerably, because the shorter the cable is, the higher the usable bandwidth. A new problem arises in an FTTC network from the fact that now the DSLAM is to be located nearer to the subscribers, whereas the DSLAM of a conventional network is installed at the central site, where it is much easier to arrange the necessary power supply and where the environmental factors (temperature range and humidity) crucial for the equipment electronics are easier to control. In an FTTC network topology, the remote DSLAM (subsequently RDSLAM) has to be installed, for example, in a cabinet located at a street corner, where it is difficult to arrange a power supply and where the electronics suffer from wide temperature and humidity variations. A substantial portion of the electronics of DSLAM equipment is located in the digital transceivers of the DSL modems and in the circuitry multiplexing the data stream onto the trunk line. Also, a substantial amount of power is consumed for supplying said electronics.

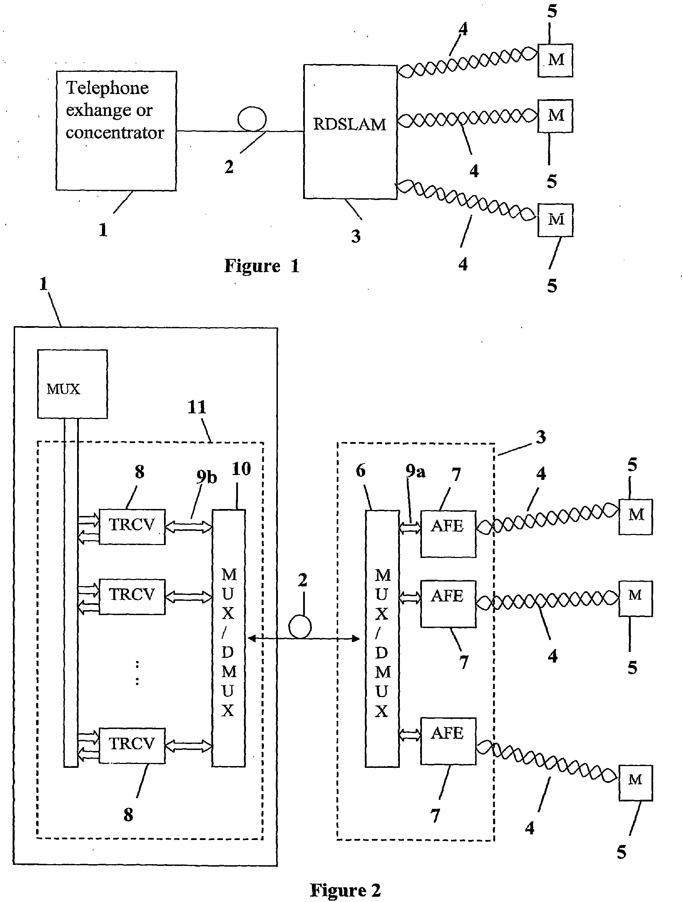

Figure **1** represents FTTC network topology according to the prior art. An optical fiber **2** connects RDSLAM equipment **3** to equipment **1** at the central site. The RDSLAM comprises each subscriber's entire DSL modem at the optical fiber end, including all analog and digital parts of the DSL modem. Hence, all analog and digital signal processing required for transporting the data over each subscriber's pair cable **4** takes place in the RDSLAM and the subscriber's DSL modem **5.** At the central site, the optical fiber is connected to a communication device of the trunk network, such as an ATM switch (Asynchronous Transfer Mode) or an IP router (Internet Protocol), depending on the transmission protocol used. The data streams between all subscribers and the central site are multiplexed onto the optical fiber 2 in both transmission directions.

In the following, a DSL modem at the subscriber will be termed "subscriber's transmission device".

Publication FI-111,898 (Finnish Patent) discloses a method in which the equipment at the subscriber end of the optical fiber can be made to comprise a minimum of active electronics, comprising only the analog parts of the DSL modem and a multiplexing element adapting the analog-to-digital and digital-to-analog converters included in the analog parts to the optical fiber. Figure **2** illustrates the principle of the method disclosed in the publication FI-111,898, according to which all electronics of the RDSLAM **3** are located in the central site equipment **11,** except for the essential analog parts **7** of the DSL modems. This is realized in such a way that the digital sample sequence signals **9a** and **9b** passed between the digital transceiver **8** in the DSL modem of each subscriber at the central site and the analog-to-digital converter and digital-to-analog converter included in the analog parts **7** of the RDSLAM **3** are transmitted over optical fiber **2.** This takes place in such a way that the subscriber-specific digital sample sequence signals **9a** and **9b** are multiplexed into a single digital information stream in a multiplexer/demultiplexer **10** at the central site and in a multiplexer/demultiplexer **6** of the RDSLAM, and the aggregated information stream is transmitted over the optical fiber **2** in both transmission directions. Furthermore, an auxiliary channel can be provided for each subscriber, via which each digital transceiver **8** of the central site can monitor the operation of the corresponding analog parts **7,** for example automatic signal gain control, in the RDSLAM. Said auxiliary channel is realized by multiplexing the data stream in the auxiliary channel onto the information stream transmitted over the optical fiber.

The electronics in the RDSLAM in accordance with the system disclosed in publication FI-111,898 are considerably simpler than those of a conventional RDSLAM, which offers considerable advantages for example in arranging the power supply and in taking account of a demanding installation environment. The drawback of the system disclosed in publication FI-111,898 is that the bit rate of the information stream to be transferred over the optical fiber is considerably higher than in a conventional RDSLAM. Let us study an example in which data is transmitted to a subscriber in accordance with a bandwidth utilization profile set out in the VDSL standard ITU-T G.993.2 using a frequency range up to 12 MHz. One skilled in the art is aware of the fact that on the basis of the sampling theorem, the sampling frequency of a digital-to-analog conversion (DA conversion) must be at least twice that much, in practice slightly more, approximately 30 MHz, and the required bit accuracy of the DA conversion must be about 12 bits. In such a case, to transmit the DA conversion over the optical fiber, a transmission rate of 30 MHz $\times$ 12 bit = 360 Mbit/s is required. In the exemplified case, the bit rate to be transmitted to the subscriber is of the order of 30 Mbit/s at most, and thus approximately a ten-fold bit rate must be transmitted over the optical fiber compared to this. If the traffic of, say, twenty subscribers is to be transmitted onto a single optical fiber, a transmission rate of about 7.2 Gbit/s is required on the optical fiber. The data bit rate to be transmitted over optical fiber is not crucial as such and does not affect the actual fiber costs, but the available technology has a decisive influence on the implementation and costs of the optical transmitter and receiver (fiber transceiver). Available technology offers inexpensive components for implementing the fiber transceiver up to a bit rate of about 1 Gbit/s, but, but when the rate exceeds 1 Gbit/s, the cost for the components will increase very steeply. Hence, the very high bit rate required on optical fiber will increase the equipment costs considerably.

It is an object of the present invention to overcome the problems of the prior art and to provide an entirely novel method for implementing an FTTC subscriber network and an RDSLAM.

## Summary

The invention relates to a method whereby the digital signal processing of the transmitter and receiver of a DSL modem, required in an RDSLAM at the fiber end of a pair cable and being an essential component in an FTTC subscriber network, which transmits a data signal over a subscriber-specific metallic twisted pair cable, is located in a distributed manner at both ends of the fiber in such a way that part of the digital signal processing takes place at the central site and part of it in the RDSLAM. Thus, the optical fiber transmits the digital signals passed between the signal processing element at the central site and the signal processing element in the RDSLAM in both transmission directions. The divider point delimiting the part of the signal processing to be carried out at the central site is selected in such a way that the bit rate to be transmitted over the fiber will be sufficiently low, but on the other hand one strives to keep the digital signal processing at the DSLAM as simple as possible.

As a first aspect of the invention a new method for establishing a digital subscriber connection between a central site and a subscriber's transmission device is provided. The method is characterized by that which is set forth in the characterizing portion of an independent claim directed to the method.

As a second aspect of the invention a new system for establishing a digital subscriber connection between a central site and a subscriber's transmission device is provided. The system is characterized by that which is set forth in the characterizing portion of an independent claim directed to the system.

In systems according to preferred embodiments of the invention, the digital signal processing of a DSL modem utilizing Discrete MultiTone modulation is distributed between the central site and the RDSLAM in such a way that the active electronics included in the RDSLAM is simpler and less costly than that of the prior art.

In systems according to preferred embodiments of the invention, the digital signal processing of a DSL modem utilizing QAM modulation is distributed between the central site and the RDSLAM in such a way that the active electronics included in the RDSLAM are simpler and less costly than those of the prior art.

The invention affords substantial advantages.

In FTTC topology, the RDSLAM equipment to be installed in the hard environment at the subscriber end of the optical fiber is less complex, comprises less digital electronic circuits and can be implemented using less expensive optical components as compared to a system of the prior art.

In the following, the invention will be examined in greater detail by means of the appended drawings and exemplifying embodiments.

## List of figures

FIG. **1** represents the structure of a prior art conventional FTTC subscriber network and the RDSLAM equipment residing at the subscriber end of an optical fiber.

FIG. **2** depicts the structure of a prior art network further developed from the conventional FTTC subscriber network, the RDSLAM equipment residing at the subscriber end of the optical fiber and central site equipment in which the DSL modem included in the conventional RDSLAM is located in a distributed manner so that the analog parts are located in an RDSLAM and the digital signal processing is entirely located at the central site.

FIG. **3** illustrates a principle according to the invention whereby the digital signal processing of a DSL modem, which is located entirely in an RDSLAM of a conventional system, is deployed in a distributed manner in both the RDSLAM and at the central site.

FIG. **4** illustrates signal processing in a prior art Discrete MultiTone transmitter and receiver, to which reference is made in describing preferred embodiments of the invention.

FIG. **5** illustrates signal processing in a prior art QAM transmitted and receiver, to which reference is made in describing preferred embodiments of the invention.

## Detailed description of embodiments of the invention

The following abbreviations are used in this document:

| | |
|---|---|
| AD conversion | analog-to-digital conversion |
| AGC | Automatic Gain Control |
| ATM | Asynchronous Transfer Mode |
| DA conversion | digital-to-analog conversion |
| DMT modulation | Discrete MultiTone modulation |
| DSL | Digital Subscriber Line |
| DSLAM | Digital Subscriber Line Access Multiplexer |
| DSP | Digital Signal Processing |
| FTTC | Fiber To The Curb, Fiber To The Cabinet; subscriber network consisting of an optical fiber and a metallic cable |
| IP | Internet Protocol |
| QAM | Quadrature Amplitude Modulation |
| RDSLAM | Remote DSLAM of an FTTC network |

## Basic idea of the invention

The basic idea of the method of the invention is to locate the digital signal processing functions of the subscriber-specific DSL modem, said functions residing either entirely in the RDSLAM or entirely at the central site in prior art methods, in a distributed manner so that part of the digital signal processing functions of the receiver are located at the central site, part of them are located in the RDSLAM and the digital signals passed between said signal processing functions are transmitted over one or more optical fibers by multiplexing said signals from all subscribers in digital form onto an optical fiber or fibers. The divider point delimiting the part of the signal processing to be located at the central site is selected in such a way that the bit rate to be transmitted over the fiber will be sufficiently low, but on the other hand it is striven to keep the digital signal processing at the RDSLAM as simple as possible.

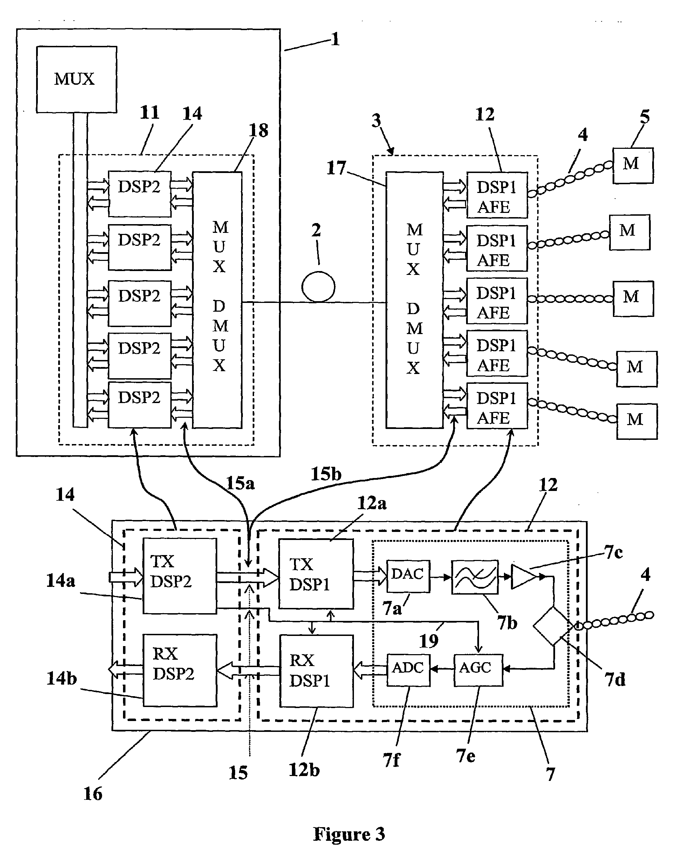

**Figure 3** illustrates essential details of the method of the invention. An optical fiber **2** connects the conversion and multiplexing equipment **11** at the central site and the RDSLAM equipment **3,** which is closer to the subscribers. A metallic pair cable **4,** i.e. a subscriber line, connects each subscriber's transmission device **5** to the RDSLAM. Data is transported in both transmission directions over the pair cable **4** by using a modulation method appropriate for a transmission link constituted by a metallic pair cable, for example the DMT or QAM method. Figure **3** illustrates how the digital signal processing functions of a subscriber-specific DSL modem **16,** which in the method according to the prior art are located entirely in the RDSLAM or entirely at the central site, are located in a distributed manner in the method of the invention. A first signal processing element **12** residing in the RDSLAM comprises all analog parts **7** of the DSL modem as well as a first transmitter part **12a** and a first receiver part **12b,** which perform digital signal processing. The analog parts **7** comprise elements known to those skilled in the art, including a digital-to-analog converter **7a,** an analog filter **7b,** a line driver **7c,** a hybrid **7d,** an AGC circuit **7e** and an analog-to-digital converter **7f.** A second signal processing element **14** located at the central site comprises a second transmitter part **14a** and a second receiver part **14b,** which perform digital signal processing. Hence, the digital signal processing of the DSL modem is located in such a way that part of the digital signal processing of both the transmitter and the receiver takes place at the central site and part of it in the RDSLAM. The digital signal **15a** of the sending direction and the digital signal **15b** of the receiving direction, which pass the divider point **15** between the first and second signal processing element (**12** and **14**) of each subscriber, are multiplexed in a first multiplexing/demultiplexing element **17** residing in the RDSLAM and in a second multiplexing/ demultiplexing element **18** residing at the central site, and transported over the optical fiber **2** in both transmission directions. Likewise, the subscriber-specific signals **15a** and **15b** of the sending and receiving direction are demultiplexed and separated at the reverse end of the optical fiber in said first and second multiplexing/demultiplexing element. The analog parts **7** in the RDSLAM, the first transmitter part **12a** and the first receiver part **12b,** possibly require control signals from the signal processing elements **14a** and **14b** of the central site and also from the processor at the central site, which monitors the operation of said parts. The control signals are transported over the optical fiber **2** via an auxiliary channel, which is realized by multiplexing the control signals **19** with the digital signal **15a** of the sending direction onto the optical fiber.

The principle according to which the digital signal processing of both the transmitter and the receiver is divided among the central site and the RDSLAM is greatly dependent on the modulation method employed, on how complex signal processing functions one desires to deploy in the RDSLAM, as well as how low a bit rate for the information to be transported over the optical fiber one desires to achieve. In the following, a system utilizing Discrete MultiTone modulation and a system utilizing QAM modulation are considered as examples. It should be noted that the examples below represent only two preferred embodiments and it is apparent to one skilled in the art that the invention is not limited to these examples and to the modulation methods of said examples, but it can be varied in a number of ways within the scope of the inventive idea.

*Preferred embodiments in utilizing DMT modulation in transmission over a metallic pair cable*

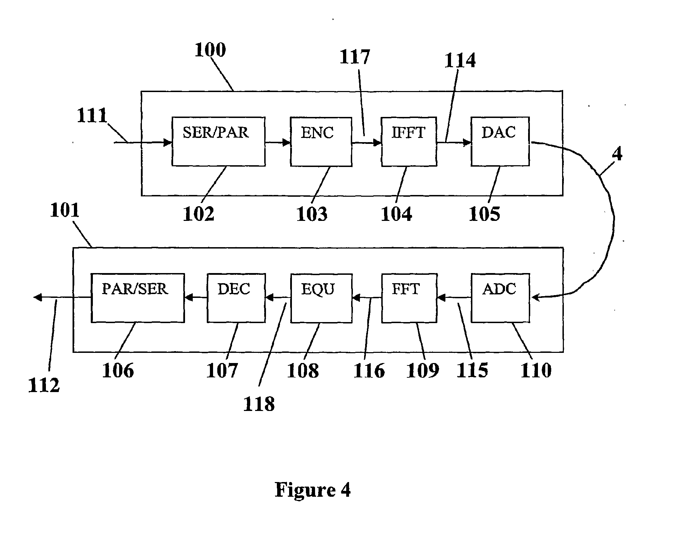

**Figure 4** depicts a transmission system of the prior art utilizing DMT modulation (Discrete MultiTone modulation), which is widely used in ADSL, ADSL+ and VDSL2 modems. The operation of the DMT transmitter **100** and DMT receiver **101** is well known to those skilled in the art (e.g. John A. C. Bingham, Multicarrier Modulation for Data Transmission: An Idea Whose Time Has Come, IEEE Communications Magazine, May 1990), and thus said operations will be only briefly described herein.

A digital data stream **111** to be transmitted over the transmission link, which in this case is a metallic pair cable **4,** is grouped in element **102** into bit sets, and each bit set is expressed in a coder element **103** as a complex vector whose magnitude and phase represent the amplitude and phase of the subcarrier corresponding to each bit set. The number of data bits comprised in a discrete bit set is selected in accordance with how many bits the subcarrier corresponding to said bit set one wishes to transport over the link. The coder element **103** thus generates K complex values **117** ("first K set" hereinbelow), as many as the desired number of carriers transporting information. Said K complex values are inserted in a first N-element complex vector and the remaining N-K elements are set to zero. In practice, N is selected to be a power of two. A first Fourier transformation element **104** performs an inverse discrete Fourier transformation on the first complex vector, and produces a second N-element complex vector. A first N-element real vector **114** is obtained from the real parts of said second N-element complex vector and it represents a discrete time domain signal sample comprising N elements. These N signal samples are converted into analog form in a DA converter **105,** and the resultant analog signal form is transmitted after low-pass filtering to a pair cable **4.** The analog signal comprises K carriers in the frequency domain, each carrying a certain number of data bits. The signal transported through the pair cable **4** is converted into a discrete time digital sample sequence signal in an AD converter **110** of the receiver **101.** N samples are taken from the sample sequence signal, suitably phased to the starting moment of the signal form sent by the transmitter, and an N-element second real vector **115** is obtained. A second Fourier transformation element **109** performs a discrete Fourier transformation on the second real vector, and the result is an N-element third complex vector whose given K elements **116** ("second K set") comprise the data information passed over cable **4.** The signal amplitude and phase distortion incurred in the cable **4** has changed the phase and amplitude of each element in the third complex vector **116.** The phase and amplitude are corrected with an adaptive equalizer **108,** after which each of the K elements are expressed as a bit set in a detector element **107,** and the bit set is further converted into a serial bit stream **112** in a equalizer element **106.**

When one strives to reduce the bit rate of the information stream to be transported over the optical cable, one can select from among a number of division principles according to which the above digital signal processing functions are divided among both ends of the optical fiber. An advantageous division principle is such that the interface of the coder element **103** and the Fourier transformation element **104** is the divider point in the transmitter, and the interface of the Fourier transformation element **109** and the adaptive corrector **108** is the divider point in the receiver. Thus, first K sets **117** are transported over the optical fiber in the sending direction and second K sets **116** are transported in the receiving direction. Hence only the information corresponding to the carriers used (K) is transported over the optical fiber, and the requisite transmission rate on the optical fiber is lower than that required in transporting the AD and DA conversion signals **115** and **114** over the fiber, since in practice K is always considerably smaller than N. This division principle is also advantageous because the majority of the signal processing functions at the receiver is then located at the central site, where for example power consumption does not pose as great a problem as in the RDSLAM.

Let us examine the advantage gained by means of an example:

The bandwidth of signal to be transported over a subscriber cable is 12 MHz. The sampling frequency of the AD and DA conversion is 30 MHz. One transmission direction utilizes the bandwidth 0.1 - 3.1 MHz and the other transmission direction the bandwidth 7 - 12 MHz. Let us examine the latter transmission direction, in which the payload bandwidth is 12 - 7 = 5 MHz. Hence, the ratio of the K number of the first K set **117** and the N number of the first N-element real vector **114** is

$$K/N = 5MHz / 30MHz = 1/6$$

Taking into account that the K set consists of complex numbers in which one element comprises a real and an imaginary part, the effective value of the ratio K/N will be 1/3. Therefore, the method of the invention affords the bit rate to be transported over the optical fiber to be reduced to approximately one third compared to the prior art. Carrying out a corresponding examination at the receiving end, one finds that the same ratio is obtained for the number K in the second K set **116** and the number N in the N-element second real vector **115,** and thus the advantage gained is equally great also in the receiving direction when received information is transported over the optical fiber from the RDSLAM to the central site.

The advantage gained in the other transmission direction is even greater, since the ratio K/N is even smaller:

$$(3.1 - 0.1)/30 = 1/10$$

An example of another advantageous division principle is an arrangement where the adaptive equalizer **108** of the receiver is located in the RDSLAM and the detector element **107** at the central site, in which case the sample sequence signal **118** passed between the two is transported over the optical fiber. This embodiment affords a lower bit rate on the optical fiber, compared to the previous embodiment, since the bit accuracy of signal **118** need not be as high as that of signal **116.** On the other hand, the signal processing in the RDSLAM is more complex than that in the previous embodiment.

*Preferred embodiments in utilizing QAM modulation in transmission over a metallic pair cable*

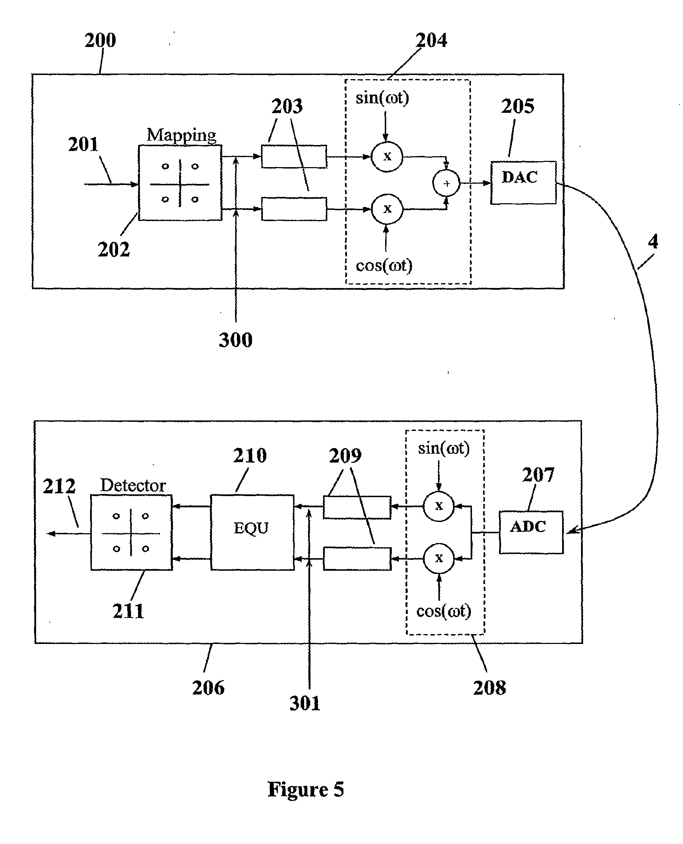

The preferred embodiment of the invention is also greatly dependent on the modulation method to be used on the metallic pair cable. Figure 5 illustrates a prior art transmission system utilizing QAM modulation (Quadrature Amplitude Modulation). The structural parts of the QAM transmitter **200** and QAM receiver **206** as well as their operation are part of the prior art (for example: John G. Proakis, Digital Communications, McGraw-Hill Book Company), and hence these are only briefly described herein.

A synchronous serial bit stream **201** to be transmitted is divided in transmitter **200** into sets ofN bits (N typically 1 - 10), and each bit set is expressed in symbol converter **202** as a two-dimensional symbol. The digital two-dimensional sample sequence signal **300** constituted by successive symbols is filtered in baseband filters (aka pulse shapers in many instances) **203,** which simultaneously interpolate the two-dimensional signal obtained in such a way that the signal sampling frequency is increased. The obtained signal having sufficient sampling frequency is processed in a modulator **204** that shifts the signal spectrum to be around the desired carrier frequency f (f = $\omega/2\pi$) and converts the signal into a one-dimensional real form. The real signal obtained is converted with a DA converter **205** into analog form, processed with analog filters and analog amplifiers and supplied to a metallic pair cable **4.** The signal that has passed the pair cable **4** is converted in receiver **206** into digital sample sequence form. The sample sequence signal obtained is processed in demodulator **208** and in baseband filters **209,** together converting the signal into a two-dimensional baseband signal **301.** The baseband filters **209** also decimate the signal, and hence the signal sampling frequency is decreased, in practical implementations usually to symbol frequency or double symbol frequency. This baseband signal **301** is distorted owing to linear amplitude and phase distortions incurred in the metallic pair cable. These distortions are corrected with an adaptive equalizer **210.** The sample sequence modified by the adaptive equalizer is processed in a detector **211,** which outputs a two-dimensional symbol, corresponding to the respective transmitted symbol, from each signal sample, and further converts said symbol into corresponding serial data bits **212.**

When one strives to reduce the bit rate of the information stream to be transported over the optical cable, one advantageous division principle for dividing digital signal processing functions among both ends of the optical fiber is the following.

The divider point in the transmitter is selected for example in such a way that the symbol converter **202** is located at the central site and the baseband filters **203** are located in the RDSLAM. Thus the signal **300** passed from the symbol converter to the baseband filters is transported over the optical fiber from the central site to the RDSLAM. This divider point is preferred since the sample frequency of the signal **300** is the symbol frequency, which in practice is considerably lower than the sample frequency of the DA converter. Another preferable divider point in the sending direction would be obtained for example by dividing the baseband filters **203** into two parts, the first part carrying out the pulse modulation and the second part carrying out the interpolation that increases the signal sample frequency, and by selecting as the divider point the two-dimensional sample sequence signal passed between these two parts. This will simplify the signal processing in the RDSLAM and simultaneously enable a moderate signal bit rate for transfer over the optical fiber.

The divider point in the receiver is selected for example in such a way that the adaptive equalizer **210** is located at the central site and the baseband filters 209 in the RDSLAM. Thus the signal **301** passed from the baseband filters to the corrector is transported over the optical fiber from the RDSLAM to the central site. The sample frequency of signal **301** is in practice the symbol frequency or double symbol frequency, i.e. considerably lower than the sample frequency of the AD conversion, which will considerably decrease the bit rate of the information to be transferred over the optical fiber in comparison with the prior art. Since the adaptive equalizer **210** is a complex element requiring a considerable amount of signal processing computation, a significant portion of the signal processing is still located at the central site.

Even though the invention has been explained in the above with reference to examples in accordance with the accompanying drawings, it is apparent to one skilled in the art that the invention is not limited to the examples but can be varied in multiple ways within the scope of the inventive idea set forth in the above and in the appended claims. For example, the invention can be applied to all digital modulation methods suited to subscriber cable transmission, and in the embodiments of the invention the optical fiber transmission can be arranged and the subscriber-specific signals that are transported over the optical fiber can be multiplexed onto the optical fiber in many different ways.

**Claims**

1. A method for establishing a digital subscriber connection between a central site (1) and a subscriber's transmission device (5), the method comprising:

   - transferring a first signal in digital form through an optical fiber (2) from the central site to an equipment (3),
   - converting in the equipment the first signal into analog form,

   - transferring the first signal in analog form through a pair cable (4) from the equipment to the subscriber's transmission device,
   - transferring a second signal in analog form through the pair cable from the subscriber's transmission device to the equipment,
   - converting in the equipment the second signal into digital form, and
   - transferring the second signal in digital form through the optical fiber from the equipment to the central site,

   **characterized in that** a digital subscriber line modem (12, 14) is located in a distributed manner in the central site and in the equipment in such a way that the method comprises:

   - using a first transmitter part (12a) of the digital subscriber line modem in the equipment for digital signal processing of the first signal,
   - using a second transmitter part (14a) of the digital subscriber line modem in the central site for digital signal processing of the first signal,
   - using a first receiver part (12b) of the digital subscriber line modem in the equipment for digital signal processing of the second signal,
   - using a second receiver part (14b) of the digital subscriber line modem in the central site for digital signal processing of the second signal, and
   - using analog parts (7) of the digital subscriber line modem in the equipment for analog signal processing of the first signal and for analog signal processing of the second signal.

2. A method as claimed in Claim **1,** wherein control commands for controlling the analog parts of the digital subscriber line modem are specified at the central site and the control commands are transmitted over the optical fiber multiplexed into the first signal.

3. A method as claimed in Claim **1,** wherein control commands for controlling the first transmitter part of the digital subscriber line modem and for controlling the first receiver part of the digital subscriber line modem are specified at the central site and the control commands are transmitted over the optical fiber multiplexed into the first signal.

4. A system for establishing a digital subscriber connection between a central site (1) and a subscriber's transmission device (5), the system comprising:

   - an optical fiber (2) between the central site and an equipment (3), the central site being capable of transmitting a first signal in digital form to the optical fiber and receiving a second signal in digital form from the optical fiber,
   - a pair cable (4) between the equipment and the subscriber's transmission device, the equipment being capable of receiving the first signal in digital form from the optical fiber, converting the first signal into analog form, transmitting the first signal in analog form to the pair cable, receiving the second signal in analog form from the pair cable, converting the second signal into digital form, and transmitting the second signal in digital form to the optical fiber,

**characterized in that** a digital subscriber line modem (12, 14) is located in a distributed manner in the central site and in the equipment in such a way that:

- the equipment includes a first transmitter part (12a) of the digital subscriber line modem for digital signal processing of the first signal,
- the central site includes a second transmitter part (14a) of the digital subscriber line modem for digital signal processing of the first signal,
- the equipment includes a first receiver part (12b) of the digital subscriber line modem for digital signal processing of the second signal,
- the central site includes a second receiver part (14b) of the digital subscriber line modem for digital signal processing of the second signal, and
- the equipment includes analog parts (7) of the digital subscriber line modem for analog signal processing of the first signal and for analog signal processing of the second signal.

5. A system as claimed in Claim **4,** wherein the central site comprises means for specifying control commands for controlling the analog parts of the digital subscriber line modem, and means for transmitting the control commands over the optical fiber multiplexed into the first signal.

6. A system as claimed in Claim **4,** wherein the central site comprises means for specifying control commands for controlling the first transmitter part of the digital subscriber line modem and for controlling the first receiver part of the digital subscriber line modem, and means for transmitting the control commands over the optical fiber multiplexed into the first signal.

**Patentansprüche**

1. Verfahren zur Herstellung eines digitalen Teilnehmeranschlusses zwischen einer Zentralstelle (1) und einem Übertragungsgerät (5) eines Teilnehmers, aufweisend:

- Übertragung eines ersten Signals in digitaler Form durch eine Lichtfaser (2) von der Zentralstelle zu einer Einrichtung (3),
- Umwandlung des ersten Signals in eine analoge Form in der Einrichtung
- Übertragung des ersten Signals in analoger Form durch ein paarverseiltes Kabel (4) von der Einrichtung zum Übertragungsgerät des Teilnehmers
- Übertragung eines zweiten Signals in analoger Form durch das paarverseilte Kabel von dem Übertragungsgerät des Teilnehmers zur Einrichtung
- Umwandlung des zweiten Signals in eine digitale Form in der Einrichtung und
- Übertragung des zweiten Signals in digitaler Form durch die Lichtfaser von der Einrichtung zur Zentralstelle,

**dadurch gekennzeichnet, dass** ein digitales Teilnehmerleitungsmodem (12, 14) in der Zentralstelle und in der Einrichtung verteilt angeordnet ist, so dass beim Verfahren:

- ein erster Senderteil (12a) des digitalen Teilnehmerleitungsmodems in der Einrichtung zur digitalen Signalverarbeitung des ersten Signals verwendet wird
- ein zweiter Senderteil (14a) des digitalen Teilnehmerleitungsmodems in der Zentralstelle zur digitalen Signalverarbeitung des ersten Signals verwendet wird
- ein erster Empfängerteil (12b) des digitalen Teilnehmerleitungsmodems in der Einrichtung zur digitalen Signalverarbeitung des zweiten Signals verwendet wird
- ein zweiter Empfängerteil (14b) des digitalen Teilnehmerleitungsmodems in der Zentralstelle zur digitalen Signalverarbeitung des zweiten Signals verwendet wird
- analoge Teile (7) des digitalen Teilnehmerleitungsmodems in der Einrichtung zur analogen Signalverarbeitung des ersten Signals und zur analogen Signalverarbeitung des zweiten Signals verwendet werden.

2. Verfahren nach Anspruch 1, wobei Steuerbefehle zur Steuerung der analogen Teile des digitalen Teilnehmerleitungsmodems an der Zentralstelle festgelegt werden und die Steuerbefehle über die in das erste Signal gemultiplexte Lichtfaser übertragen werden.

3. Verfahren nach Anspruch 1, wobei Steuerbefehle zur Steuerung des ersten Senderteils des digitalen Teilnehmerleitungsmodems und zur Steuerung des ersten Empfängerteils des digitalen Teilnehmerleitungsmodems an der Zentralstelle festgelegt werden und die Steuerbefehle über die in das erste Signal gemultiplexte Lichtfaser übertragen werden.

4. System zur Herstellung eines digitalen Teilnehmeranschlusses zwischen einer Zentralstelle (1) und einem Übertragungsgerät (5) eines Teilnehmers, aufweisend:

- eine Lichtfaser (2) zwischen der Zentralstelle und einer Einrichtung (3), wobei die Zentralstelle fähig ist, ein erstes Signal in digitaler Form der Lichtfaser zu übertragen und ein zweites Signal in digitaler Form von der Lichtfaser zu empfangen

- ein paarverseiltes Kabel (4) zwischen der Einrichtung und dem Übertragungsgerät des Teilnehmers, wobei die Einrichtung fähig ist, das erste Signal in digitaler Form von der Lichtfaser zu empfangen, das erste Signal in eine analoge Form umzuwandeln, das erste Signal in analoger Form dem paarverseilten Kabel zu übertragen, das zweite Signal in analoger Form von dem paarverseilten Kabel zu empfangen, das zweite Signal in eine digitale Form umzuwandeln und das zweite Signal in digitaler Form der Lichtfaser zu übertragen,

**dadurch gekennzeichnet, dass** ein digitales Teilnehmerleitungsmodem (12, 14) in der Zentralstelle und in der Einrichtung verteilt angeordnet ist, so dass:

- die Einrichtung einen ersten Senderteil (12a) des digitalen Teilnehmerleitungsmodems zur digitalen Signalverarbeitung des ersten Signals umfasst

- die Zentralstelle einen zweiten Senderteil (14a) des digitalen Teilnehmerleitungsmodems zur digitalen Signalverarbeitung des ersten Signals umfasst

- die Einrichtung einen ersten Empfängerteil (12b) des digitalen Teilnehmerleitungsmodems zur digitalen Signalverarbeitung des zweiten Signals umfasst

- die Zentralstelle einen zweiten Empfängerteil (14b) des digitalen Teilnehmerleitungsmodems zur digitalen Signalverarbeitung des zweiten Signals umfasst und

- die Einrichtung analoge Teile (7) des digitalen Teilnehmerleitungsmodems zur analogen Signalverarbeitung des ersten Signals und zur analogen Signalverarbeitung des zweiten Signals umfasst.

**5.** System nach Anspruch 4, wobei die Zentralstelle aufweist: Mittel zur Festlegung von Steuerbefehlen, um die analogen Teile des digitalen Teilnehmerleitungsmodems zu steuern, und Mittel zur Übertragung der Steuerbefehle über die in das erste Signal gemultiplexte Lichtfaser.

**6.** System nach Anspruch 4, wobei die Zentralstelle aufweist: Mittel zur Festlegung von Steuerbefehlen, um den ersten Senderteil des digitalen Teilnehmerleitungsmodems zu steuern und den ersten Empfängerteil des digitalen Teilnehmerleitungsmodems zu steuern, und Mittel zur Übertragung der Steuerbefehle über die in das erste Signal gemultiplexte Lichtfaser.

**Revendications**

**1.** Procédé d'établissement d'une connexion entre un site central (1) et un dispositif d'émission (5) d'un abonné, le procédé consistant à

- transférer un premier signal sous forme numérique par une fibre optique (2) du site central à un équipement (3),
- convertir le premier signal en forme analogique dans l'équipement,
- transférer le premier signal sous forme analogique par un câble à paires (4) de l'équipement au dispositif d'émission de l'abonné,
- transférer un second signal sous forme analogique par le câble à paires du dispositif d'émission de l'abonné à l'équipement,
- convertir dans l'équipement le second signal en forme numérique, et
- transférer le second signal sous forme numérique par la fibre optique de l'équipement au site central,

**caractérisé en ce qu'**un modem de ligne d'abonné numérique (12, 14) se trouve d'une manière répartie dans le site central et dans l'équipement de sorte que le procédé consiste à
- utiliser une première partie émetteur (12a) du modem de ligne d'abonné numérique dans l'équipement pour le traitement de signal numérique du premier signal,
- utiliser une seconde partie émetteur (14a) du modem de ligne d'abonné numérique dans le site central pour le traitement de signal numérique du premier signal,
- utiliser une première partie récepteur (12b) du modem de ligne d'abonné numérique dans l'équipement pour le traitement de signal numérique du second signal,
- utiliser une seconde partie récepteur (14b) du modem de ligne d'abonné numérique dans le site central pour le traitement de signal numérique du second signal, et
- utiliser des parties analogiques (7) du modem de ligne d'abonné numérique dans l'équipement pour le traitement de signal analogique du premier signal et pour le traitement de signal analogique du second signal.

**2.** Procédé selon la revendication 1, dans lequel les commandes pour commander les parties analogiques du modem de ligne d'abonné numérique sont spécifiées dans le site central et les commandes sont transmises, sur fibre optique, multiplexées dans le premier signal.

3. Procédé selon la revendication 1, dans lequel les commandes pour commander la première partie émetteur du modem de ligne d'abonné numérique et pour commander la première partie récepteur du modem de ligne d'abonné numérique sont spécifiées dans le site central et les commandes sont transmises, sur fibre optique, multiplexées dans le premier signal.

4. Système pour établir une connexion d'abonné numérique entre un site central (1) et un dispositif émetteur (5) d'un abonné, le système comportant :

   - une fibre optique (2) entre le site central et un équipement (3), le site central étant capable de transmettre un premier signal sous forme numérique à la fibre optique et de recevoir un second signal sous forme numérique depuis la fibre optique,
   - un câble à paires (4) entre l'équipement et le dispositif émetteur de l'abonné, l'équipement étant capable de recevoir le premier signal sous forme numérique depuis la fibre optique, de convertir le premier signal en forme analogique, de transmettre le premier signal sous forme analogique au câble à paires, de recevoir le second signal sous forme analogique du câble à paires, de convertir le second signal en forme numérique et de transmettre le second signal sous forme numérique à la fibre optique,
   **caractérisé en ce qu'**un modem de ligne d'abonné numérique (12, 14) se trouve d'une manière répartie dans le site central et dans l'équipement de sorte que
   - l'équipement comporte une première partie émetteur (12a) du modem de ligne d'abonné numérique pour le traitement de signal numérique du premier signal,
   - le site central comporte une seconde partie émetteur (14a) du modem de ligne d'abonné numérique pour le traitement de signal numérique du premier signal,
   - l'équipement comporte une première partie récepteur (12b) du modem de ligne d'abonné numérique pour le traitement de signal numérique du second signal,
   - le site central comporte une seconde partie récepteur (14b) du modem de ligne d'abonné numérique pour le traitement de signal numérique du second signal, et
   - l'équipement comporte des parties analogiques (7) du modem de ligne d'abonné numérique pour le traitement de signal analogique du premier signal et pour le traitement de signal analogique du second signal.

5. Système selon la revendication 4, dans lequel le site central comporte des moyens pour spécifier les commandes pour commander les parties analogiques du modem de ligne d'abonné numérique et des moyens pour transmettre les commandes, sur fibre optique, multiplexées dans le premier signal.

6. Système selon la revendication 4, dans lequel le site central comporte des moyens pour spécifier les commandes pour commander la première partie émetteur du modem de ligne d'abonné numérique et pour commander la première partie récepteur du modem de ligne d'abonné et des moyens pour transmettre les commandes, sur fibre optique, multiplexées dans le premier signal.

Figure 1

Figure 2

**Figure 3**

**Figure 4**

**Figure 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FI 111898

**Non-patent literature cited in the description**

- **JOHN A. C. BINGHAM.** Multicarrier Modulation for Data Transmission: An Idea Whose Time Has Come. *IEEE Communications Magazine,* May 1990

- **JOHN G. PROAKIS.** Digital Communications. Mc-Graw-Hill Book Company